# EUROPÄISCHE PATENTSCHRIFT

(11) **EP 2 815 994 B1**
(45) Veröffentlichungstag und Bekanntmachung des Hinweises auf die Patenterteilung: **29.07.2015**
(21) Anmeldenummer: 14168781.4
(22) Anmeldetag: 19.05.2014
(51) Int. Cl.: B65H 3/04, B65H 3/52, B65H 3/56

(54) **Anleger für flache Güter, insbesondere Beilagenanleger, und Verfahren zum Abziehen flacher Güter aus einem Stapel**
Insertion device for flat articles, in particular insertion device for inserts and method for withdrawing flat goods from a stack
Margeur pour marchandises plates, notamment margeur de documents, et procédé d'extraction de marchandises plates d'une pile

(30) Priorität: 21.06.2013 DE 102013106486
(43) Veröffentlichungstag der Anmeldung: 24.12.2014
(73) Patentinhaber: BÖWE SYSTEC GmbH, 86159 Augsburg (DE)
(72) Erfinder: Höpner, Bernd, 86159 Augsburg (DE); Celeste, Ronald, 86707 Kühlenthal (DE); Hölzle, Florian, 86199 Augsburg (DE); Schempp, Harald, 86157 Augsburg (DE); Michel, Bernd, 86456 Lützelburg (DE); Hauke, Stephan, 86159 Augsburg (DE)
(74) Vertreter: Charrier, Rapp & Liebau

(56) Entgegenhaltungen:
- JP-A- S6 026 538
- JP-A- H04 101 938
- JP-A- 2001 002 265
- US-A1- 2011 236 113

## Beschreibung

Die Erfindung betrifft einen Anleger für flache Güter, insbesondere einen Beilagenanleger für Beilagen, nach dem Oberbegriff des Anspruchs 1 sowie ein Verfahren zum Abziehen flacher Güter aus einem Stapel.

Ein gattungsgemäßer Anleger ist aus der JP2001-002265 A bekannt. Diese offenbart eine Vorrichtung und ein Verfahren zum Abzeichen von Blättern unterschiedlicher Dicke aus einem Blattstapel, wobei die Vorrichtung zwei Schleuseneinrichtungen sowie ein Förderelement zum Abziehen einzelner Güter aus dem Stapel umfasst. Beim Abzug der einzelnen Blätter aus dem Stapel wird mittels eines Stellknopfs entweder die erste Schleuseneinrichtung oder die zweite Schleuseneinrichtung mit dem oberen Blatt des Stapels in Eingriff gebracht. Eine weitere Blattabzugsvorrichtung zur Verwendung in einem over-head-projector ist aus der JP04-101938 A bekannt.

Aus dem Stand der Technik sind Anleger (feeder) bekannt, mit denen flache Güter wie z.B. Blätter, Blattstapel, geklebte oder geheftete Blattstapel, Umschläge, Bögen oder Karten auf einer Sammel- oder Zusammentragbahn abgelegt werden. Derartige Anleger sind beispielsweise aus der EP 2 548 826 A, der EP 0 813 496 B1 und der EP 1 591 388 B1 bekannt. Solche Anleger werden beispielsweise in Zusammentragbahnen für Postsendungen verwendet, welche Beilagen enthalten. Der Inhalt einer Postsendung wird in Sammelbereichen der Zusammentragbahn gesammelt und dann einer Kuvertier- oder Verpackungseinrichtung zugeführt, welche die Inhalte der Postsendung in einen Umschlag steckt oder mit einer Umhüllung verpackt. Die von flachen Gütern gebildeten Inhalte der Postsendungen werden durch einen oder mehrere solcher Anleger, welche längs der Zusammentragbahn angeordnet sind, in die Sammelbereiche der Zusammentragbahn abgelegt. Insbesondere wenn sich der Inhalt der Postsendungen aus unterschiedlichen Gütertypen zusammensetzt, bspw. aus Blättern unterschiedlichen Formats oder aus Blättern und Karten, werden mehrere verschiedene Anleger hintereinander längs der Zusammentragbahn angeordnet, wobei jeder Anleger flache Güter bevorratet und diese in den definierten Sammelbereichen der Zusammentragbahn ablegt. In der Regel sind für die unterschiedlichen Güter, welche in den Sammelbereichen der Zusammentragbahn gesammelt werden und den Inhalt einer Postsendung bilden, in spezifischen Anlegern bevorratet, wobei die spezifischen Anleger auf die Art bzw. den Typ der jeweiligen Güter, die darin bevorratet werden, zugeschnitten sind. So können z.B. spezielle Anleger für einzelne Blätter unterschiedlichen Formats oder für gefalzte Blätter oder für geheftete bzw. geklebte Blattstapel oder für Karten usw. bereitgestellt werden. Die Zusammentragbahn wird je nach Zusammensetzung der zu verarbeitenden Güter mit entsprechenden Anlegern ausgestattet, wobei die Anleger austauschbar in der Zusammentragbahn angeordnet werden können.

Weitere Beilagenanleger sind z. B. aus der US 2003/0080490 A und US 2005/0082744 A bekannt. Diese Beilagenanleger enthalten ein Stapelfach zur Aufnahme der flachen Güter in Form eines Stapels sowie eine Abzugseinrichtung zum Abzug einzelner Güter aus dem Stapel. Die Abzugseinrichtung enthält ein Förderelement, bspw. in Form eines angetriebenen Riemens, sowie eine Schleuse, durch welche die von dem Förderelement aus dem Stapel abgezogenen Güter vereinzelt durchgeführt werden.

Bei solchen Beilagenanlegern kann es insbesondere bei Verarbeitung von Gütern unterschiedlicher Dicke zu Fehlfunktionen kommen, indem bspw. zwei oder mehr Güter aus dem Güterstapel abgezogen und gleichzeitig durch die Schleuse geführt werden. Solche Fehlfunktionen können bspw. entstehen, wenn die Reibkraft zwischen den untersten, aufeinanderliegenden Gütern des Stapels größer ist als die Rückhaltekraft der. Falls die Zugkraft, mit der die Abzugseinrichtung das unterste Blatt aus dem Stapel herauszieht nicht groß genug ist, um die Rückhaltekraft der Schleuse zu überwinden, kann es auch dazu kommen, dass gar kein Gut aus dem Stapel herausgezogen wird.

Insbesondere für die Verarbeitung von dickeren Gütern, bspw. von gefalzten Blättern oder von Briefumschlägen, wurden deshalb spezielle Schleusen für solche Beilagenanleger entwickelt. Solche Schleusen weisen bspw. eine Welleneinrichtung auf, mit der das durch die Schleuse geführte Gut wellenförmig verformt wird, um die Oberflächenhaftung eines vom Gutstapel abzuziehenden Guts zu reduzieren und um das flexible Gut während des Durchführens durch die Schleuse zu stabilisieren. Eine solche Schleusenanordnung mit einer Welleneinrichtung ist aus der US 7722028 B2 bekannt. Die Schleusenanordnung umfasst dabei eine Mehrzahl von Ablenkrollen, welche oberhalb einer Fördereinrichtung mit mehreren nebeneinander angeordneten Förderbändern angeordnet sind und so weit zwischen den nebeneinander liegenden Förderbändern abgesenkt werden, dass sie in das auf den Förderbändern aufliegende Gut wellenförmige Ausbuchtungen einbringen. Die Ablenkrollen sind dabei quer zur Förderrichtung im Abstand zueinander auf einer Welle angeordnet und diese Welle ist über eine einstellbare Rahmenanordnung in Bezug auf die Oberfläche der Förderbänder verschiebbar, so dass der Abstand zwischen den Ablenkrollen und der Oberfläche der Förderbänder auf einen geeigneten Wert eingestellt werden kann. Durch Einstellung des Abstands zwischen den Ablenkrollen und der Oberfläche der Förderbänder kann der Grad der Verformungen, welche durch die Ablenkrollen in das Gut eingebracht werden, geeignet gewählt werden. Auf der Welle sind neben und zwischen den Ablenkrollen noch Reibrollen angeordnet, welche das unterste Gut des Gutstapels erfassen und zwischen ihrem Außenumfang und den Förderbändern einklemmen, um das Gut aufgrund der Förderbewegung der Förderbänder in einer Förderrichtung durch die Schleuse zu führen. Die Reibräder wirken auf diese Weise als Vereinzelungseinrichtung für die einzeln aus dem Gutstapel abzuziehenden Güter. Die Ablenkräder, welche die einzeln vom Gutstapel abgezogenen Güter wellenförmig verformen, wirken beim Durchführen durch die Schleuse als Stütze oder Stabilisator für das Gut.

Anleger, welche mit dieser bekannten Schleuseneinrichtung ausgestattet sind, können dickere Güter gut verarbeiten, ohne dass beim Abzug und Vereinzeln der Güter Verwindungen am Gut auftreten, welche zu Fehlfunktionen oder Staus beim kontinuierlichen Abzug der Güter aus dem Gutstapel führen können.

Die bekannte Schleuseneinrichtung erweist sich allerdings als nachteilig, wenn mit dem Beilagenanleger, der mit einer solchen Schleuse ausgestattet ist, unterschiedliche Güter und insbesondere Güter unterschiedlicher Dicke verarbeitet werden sollen. Insbesondere bei der Verarbeitung von dünnen Gütern treten beim Betrieb der bekannten Schleuse Problemen auf, da es häufig zu Doppel- und Mehrfachabzügen kommt. Um dies zu vermeiden kann zwar die Weite des Schleusenspalts reduziert werden, um die Rückhaltekraft der Schleuse zu erhöhen. Dadurch kann es jedoch zu Verformungen der durchgeschleusten Güter oder sogar zu Beschädigungen an den Gütern kommen. Insbesondere führt eine zu starke Rückhaltekraft der Schleuse zu bleibenden Abdrücken in den durch die Schleuse durchgeführten Gütern, welche aufgrund der wellenförmigen Verformungen durch die Ablenkräder der Schleuseneinrichtung in das Gut eingebracht werden. Solche bleibenden Abdrücke sind sehr unerwünscht. Des Weiteren kann es durch die Ablenkräder bei dünnen Gütern zu übermäßig starken Verformungen und dadurch sogar zu Beschädigungen am Gut kommen, welche zu Gutstaus in der Schleuse führen können.

Um dünne Güter verarbeiten zu können, muss daher entweder ein anderer Anleger verwendet werden oder es muss zumindest die Schleuseneinrichtung ausgetauscht werden. Anleger und Schleuseneinrichtungen, welche zur Verarbeitung dünner Güter geeignet sind, sind zwar bekannt, bspw. aus den eingangs zitierten Veröffentlichungen US 2003/0080490 A und US 2005/0082744 A. Diese verursachen allerdings Probleme bei dickeren Gütern. Bei gefalzten Blättern kommt es bspw. bei diesen Anlegern zu einem Aufziehen des Falzes und damit zu einer Beschädigung am Gut und häufig auch zu Gutstaus in der Schleuse.

Aus diesen Gründen ist es bisher erforderlich, für jede zu verarbeitende Gutart einen speziell darauf abgestimmten oder zumindest dafür geeigneten Anleger bereit zu stellen. Dies verursacht zum Einen einen erheblichen Konfigurations- und Installationsaufwand beim Wechseln der Anleger in einer Zusammentragbahn, wenn ein Gutwechsel vorgenommen wird. Zum Anderen erfordert dies auch eine Bevorratung von mehreren unterschiedlichen Anlegern oder Schleuseneinrichtungen, was hohe Anschaffungskosten und Lagerplätze erfordert, weil die bevorrateten Anleger oder Schleuseneinrichtungen nur für die Abeirbeitung bestimmter Jobs benötigt werden.

Hiervon ausgehend liegt der Erfindung deshalb die Aufgabe zugrunde, einen Anleger für flache Güter bereitzustellen, mit dem problemlos und ohne Staus im kontinuierlichen Betrieb unterschiedliche Güter mit voneinander verschiedenen Eigenschaften und insbesondere Güter unterschiedlicher Art und Dicke verarbeitet werden können. Eine weitere Aufgabe besteht darin, einen möglichst flexiblen Anleger für flache Güter bereitzustellen, der in der Lage ist, sowohl dicke als auch dünne Güter , ohne bleibende Verformungen in den Gütern zu verarbeiten und dabei Abzugsfehler, wie z. B. Doppel- oder Mehrfachabzüge von Gütern oder Null-Abzüge, weitgehend zu vermieden. Durch die höhere Flexibilität des Anlegers hinsichtlich der Verschiedenartigkeit der damit zu verarbeitenden Güter soll weiterhin der Kosten-, Konfigurations- und Installationsaufwand für die Zusammenstellung von Zusammentragbahnen sowie die Lagerhaltung von einer Mehrzahl verschiedener Anleger(-typen) vermindert werden.

Diese Aufgaben werden mit einem Anleger für flache Güter mit den Merkmalen des Anspruchs 1 gelöst. Bevorzugte Ausführungsformen dieses Anlegers sind den abhängigen Ansprüchen zu entnehmen. Zur Lösung der Aufgabe trägt auch das Verfahren zum Abziehen flacher Güter aus einem Stapel mit den Merkmalen des Anspruchs 14 bei.

Der erfindungsgemäße Anleger enthält ein Stapelfach zur Aufnahme flacher Güter in Form eines Stapels sowie eine Abzugseinrichtung zum Abzug einzelner Güter aus dem Stapel entlang einer Abzugsrichtung. Die Abzugseinrichtung umfasst dabei ein Förderelement mit einer Förderfläche, welche bspw. durch die Oberfläche eines Förderbands oder eines Riemen gebildet sein kann. Das Förderelement kann auch eine Mehrzahl von Förderbändern oder Riemen enthalten, auf deren Oberfläche die aus dem Gutstapel abzuziehenden Güter aufliegen. Die Förderfläche wird dabei durch die Oberfläche der Förderbänder oder Riemen gebildet. Das Förderelement kann auch eine Mehrzahl von in Förderrichtung hintereinander angeordneten Förderwalzen oder -rollen umfassen. Die Förderfläche ist dabei durch die Ebene gebildet, welche durch die Unterseite eines auf den Förderwalzen bzw. -rollen aufliegenden Guts definiert ist.

Der erfindungsgemäße Anleger enthält weiterhin eine Schleuse, durch welche die von dem Stapel abgezogenen Güter vereinzelt mittels des Förderelements durchgeführt werden. Bei dem erfindungsgemäßen Anleger kann die Schleuse entweder durch eine erste Schleuseneinrichtung oder durch eine zweite Schleuseneinrichtung gebildet sein. Die erste Schleuseneinrichtung ist durch das Zusammenwirken des Förderelements mit einem oberhalb der Förderfläche angeordneten Schleusenelement ausgebildet, welches zwischen der Förderfläche und einer Unterseite des Schleusenelements einen Schleusenspalt bildet. Die Schleuse kann in dem erfindungsgemäßen Anleger jedoch auch durch eine zweite Schleuseneinrichtung gebildet sein, welche eine Welleneinrichtung umfasst, mit der ein durch die zweite Schleuseneinrichtung geführtes Gut wellenförmig verformt wird. Die Welleneinrichtung enthält wenigstens ein oberhalb der Förderfläche angeordnetes Leitelement.

In dem erfindungsgemäßen Anleger kann ein Bediener auswählen, durch welche Schleuseneinrichtung ein vom Stapel abgezogenes Gut durchgeführt werden soll, um eine möglichst zuverlässig und an die Eigenschaften des zu verarbeitenden Guts angepasste Verarbeitung zu gewährleisten. Zur Auswahl der geeigneten Schleuseneinrichtung ist bevorzugt sowohl das oberhalb der Förderfläche angeordnete Schleusenelement als auch das wenigstens eine, ebenfalls oberhalb der Förderfläche angeordnete Leitelement der Welleneinrichtung in Bezug auf die Förderfläche verschiebbar, um den Abstand des Schleusenelements bzw. des Leitelements zur Förderfläche auf einen für das jeweils zu verarbeitende Gut geeigneten Wert einzustellen. Das Schleusenelement und das wenigstens eine Leitelement der Welleneinrichtung sind dabei unabhängig voneinander in Bezug auf die Förderfläche verschiebbar, so dass der Abstand des Schleusenelements von der Förderfläche unabhängig vom Abstand des Leitelements auf einen geeigneten Wert eingestellt werden kann, und umgekehrt.

Durch diese zweckmäßigen Ausgestaltungen ist es möglich, die erste Schleuseneinrichtung in eine aktive Grundstellung zu bringen, in der sie ein von dem Stapel abgezogenes Gut in Eingriff nimmt, um es durch die Schleuse durchzuführen und gleichzeitig die zweite Schleuseneinrichtung in eine passive Grundstellung zu bringen, in der sie außer Eingriff mit einem abgezogenen Gut steht, wenn dieses durch die Schleuse durchgeführt wird. Umgekehrt kann die zweite Schleuseneinrichtung in eine aktive Grundstellung gebracht werden, in der sie ein vom Stapel abgezogenes Gut in Eingriff nimmt und beim Durchführen durch die Schleuse wellenförmig verformt, während sich die erste Schleuseneinrichtung in einer passiven Grundstellung befindet, in der sie nicht mit einem durch die Schleuse durchgeführten Gut in Eingriff steht.

Durch diese Einrichtung ist es mit einem erfindungsgemäßen Anleger möglich, eine Schleuseneinrichtung auszuwählen, welche bestmöglich an die Eigenschaften und insbesondere die Dicke des zu verarbeitenden Guts angepasst ist. So kann der Bediener bspw. für die Verarbeitung dünner Güter in Form von Einzelblättern die erste Schleuseneinrichtung auswählen, welche durch das Zusammenwirken des Schleusenelements mit dem Förderelement gebildet wird. Bei der Auswahl dieser Schleuseneinrichtung, bei der das Schleusenelement in eine aktive Grundstellung gebracht wird, wird die Welleneinrichtung in eine passive Grundstellung gebracht, in der sie keine Funktion ausführt und ein durch die Schleuse geführtes Gut nicht in Eingriff nimmt. In dieser Einstellung des erfindungsgemäßen Anlegers werden die vereinzelt vom Gutstapel abgezogenen Güter einzeln durch die erste Schleuseneinrichtung durchgeführt, in der das Gut beim Durchführen jedenfalls keine wellenförmige Verformung erfährt.

Für die Verarbeitung anderer Güter, insbesondere flexibler Güter und bspw. gefalzte Blätter, bei denen während des Durchführens durch die Schleuse eine Stabilisierung erforderlich ist, kann der erfindungsgemäße Anleger so eingestellt werden, dass die vom Stapel abgezogenen Güter vereinzelt durch die zweite Schleuseneinrichtung (also durch die Welleneinrichtung) geführt werden, wobei beim Durchführen eines Guts durch die zweite Schleuseneinrichtung eine wellenförmige Verformung des Guts mittels der Welleneinrichtung erfolgt. Zur Einstellung des Anlegers in dieser Stellung wird die erste Schleuseneinrichtung (Welleneinrichtung) in eine aktive Grundstellung gebracht und gleichzeitig wird die zweite Schleuseneinrichtung in eine passive Grundstellung gebracht, indem das Schleusenelement soweit von der Förderfläche abgehoben wird, dass es ein durch die Schleuse durchgeführtes Gut nicht in Eingriff nimmt, sondern ungehindert durch die Schleuse passieren lässt. In dieser Stellung des Anlegers werden also die vom Stapel vereinzelt abgezogenen Güter durch die Welleneinrichtung geführt und dabei zu ihrer Stabilisierung wellenförmig verformt.

Der erfindungsgemäße Anleger ermöglicht auf diese Weise eine Anpassung der Schleuse an die Eigenschaften der zu verarbeitenden Güter. Dadurch ist es möglich, mit dem erfindungsgemäßen Anleger unterschiedliche Güter und insbesondere Güter mit unterschiedlichen Eigenschaften zu verarbeiten. Bei einem Wechsel der zu verarbeitenden Güter ist es daher nicht mehr notwendig, den verwendeten Anleger gegen einen anderen Anleger auszutauschen, der speziell an die Eigenschaften der zu verarbeitenden Güter angepasst ist. Dies erspart erheblichen Installations- und Konfigurationsaufwand, der ansonsten bei einem Anlegerwechsel oder einem Wechsel der in dem Anleger verwendeten Schleuse anfallen würde.

In dem erfindungsgemäßen Anleger ist das Schleusenelement bevorzugt in Bezug auf die Förderfläche unabhängig von der Welleneinrichtung und dessen Leitelement(e) verschiebbar, um den Abstand zwischen dem Schleusenelement und der Förderfläche auf einen für das jeweils zu verarbeitende Gut passenden Wert einzustellen und um die zweite Schleuseneinrichtung in seine aktive oder passive Grundstellung zu bringen. Das Schleusenelement kann bspw. durch eine quer zur Abzugsrichtung angeordnete Schleusenrolle oder durch ein Schleusenblech gebildet sein. Zur Einstellung des erfindungsgemäßen Anlegers in eine Arbeitsstellung, in der die Schleuse durch die zweite Schleuseneinrichtung gebildet ist, kann das Schleusenelement in eine aktive Grundstellung in Bezug auf die Förderfläche verschoben werden. In dieser aktiven Grundstellung des Schleusenelements ist zwischen dem Schleusenelement und insbesondere dessen Unterkante (die bspw. durch den Außenumfang einer Schleusenrolle oder durch die Unterkante eines Schleusenblechs gebildet ist) und der Förderfläche ein schmaler Schleusenspalt ausgebildet, dessen Spaltweite zweckmäßig so eingestellt wird, dass nur vereinzelte Güter durch den Schleusenspalt durchgeführt werden können.

Dabei ist es auch möglich, das Schleusenelement in seiner aktiven Grundstellung in Bezug auf die Förderfläche so weit abzusenken, dass das Schleusenelement auf der Förderfläche aufliegt oder sogar in die Oberfläche des Förderelements, welche die Förderfläche definiert, verformend eingreift. Dies ist bspw. dann möglich, wenn das Förderelement durch einen oder mehrere flexible Riemen gebildet ist. Die Spaltweite des zwischen dem Schleusenelement und der Förderfläche ausgebildeten Schleusenspalts ist dann in der aktiven Grundstellung des Schleusenelements null. In diesem Ausführungsbeispiel ist es zweckmäßig, das Schleusenelement federnd zu lagern, so dass es gegen die Rückstellkraft einer Feder von der Förderfläche weggeschoben wird, wenn ein Gut durch die Schleuse geführt wird, welche durch das Schleusenelement und das Förderelement bzw. die Förderfläche ausgebildet wird. Alternativ hierzu kann auch die Oberfläche des Förderelements soweit elastisch nachgiebig ausgebildet werden, dass ein Gut durch Eingraben in die Oberfläche des Förderelement durch den sich dadurch öffnenden Schleusenspalt zwischen dem Schleusenelement und dem Förderelement durchgeleitet werden kann.

In einem bevorzugten Ausführungsbeispiel des erfindungsgemäßen Anlegers umfasst die Welleneinrichtung untere Leitelemente und obere Leitelemente, wobei die oberen Leitelemente oberhalb der Förderfläche angeordnet sind und zur Einstellung eines geeigneten Abstands in Bezug auf Förderfläche verschiebbar sind. Die oberen Leitelemente der Welleneinrichtung sind dabei zwischen einer aktiven Grundstellung und einer passiven Grundstellung verschiebbar, wobei die oberen Leitelemente in der aktiven Grundstellung mit den unteren Leitelementen und dem Förderelement ein durch die Welleneinrichtung durchgeführtes Gut in Eingriff nehmen und dabei wellenförmig verformen. Die oberen Leitelemente der Welleneinrichtung werden in ihre aktive Grundstellung gebracht, wenn die Schleuse, durch welche die vereinzelt von Stapel abgezogenen Güter durchgeführt wird, von der zweiten Schleuseneinrichtung (Welleneinrichtung) gebildet werden soll, damit das durch die ausgewählte Schleuse durchgeführte Gut beim Schleusendurchtritt wellenförmig verformt und dadurch stabilisiert wird. Soll dagegen keine Verformung des Guts beim Schleusendurchtritt erfolgen, werden die oberen Leitelemente der Welleneinrichtung in ihre passive Grundstellung gebracht, in der diese so weit von der Förderfläche abgehoben sind, dass ein durch die Welleneinrichtung geführtes Gut ohne Verformung durchgeleitet wird. Bei Einstellung der Welleneinrichtung in ihrer passiven Grundstellung wird gleichzeitig das Schleusenelement (und damit die erste Schleuseneinrichtung) in seine aktive Grundstellung gebracht, damit dann die erste Schleuseneinrichtung die Schleuse definiert, durch welche ein vom Stapel abgezogenes Gut durchgeschleust wird.

In einem bevorzugten Ausführungsbeispiel ist das Schleusenelement durch ein Schleusenblech gebildet, welches sich quer zur Abzugsrichtung erstreckt und zweckmäßig eine dem Gutstapel zugewandte und schräg zur Förderfläche stehende Anschlagfläche aufweist, an der die Vorderkante des Gutstapels anliegt. Die Anschlagfläche bildet zweckmäßig sowohl in der aktiven Grundstellung als auch in der passiven Grundstellung des Schleusenelements einen Anschlag für die Vorderkante des Gutstapels. Die der Förderfläche zugewandte Kante (Unterkante) des Schleusenblechs ist dabei zweckmäßig so abgeschrägt, dass diese Kante zumindest im Wesentlichen parallel zur Förderfläche verläuft. Dadurch wird gewährleistet, dass ein Gut, das durch den schmalen Schleusenspalt zwischen der Unterkante des Schleusenelements und der Förderfläche durchgeführt wird, beim Schleusendurchtritt nicht beschädigt werden kann. Besonders zweckmäßig ist die dem Gutstapel abgewandte Vorderseite des Schleusenblechs scharfkantig ausgeformt.

Zur Einstellung des Abstands zwischen dem Schleusenelement und der Förderfläche und insbesondere zur Einstellung einer für das zu verarbeitende Gut passenden Spaltweite des Schleusenspalts zwischen der Unterkante des Schleusenelements und der Förderfläche ist das Schleusenelement zweckmäßig an eine Spindel gekoppelt, mit der der Abstand des Schleusenelements in Bezug auf die Förderfläche stufenlos einstellbar und in gewünschten Positionen fixierbar ist. Alternativ kann das Schleusenelement auch an einen motorisch angetriebenen Schaft gekoppelt sein, um den Abstand des Schleusenelements in Bezug auf die Förderfläche zur Einstellung eines geeigneten Schleusenspalts einstellen zu können.

Das Schleusenelement, also bspw. die Schleusenrolle oder das Schleusenblech, erstreckt sich zweckmäßig quer zur Abzugsrichtung über die gesamte Breite des Förderelements. Das Förderelement kann bspw. durch einen Riemen, wie z. B durch einen Reibriemen oder einen Saugriemen, gebildet sein. Der Riemen ist dabei zweckmäßig um wenigstens zwei Rollen geführt, wobei wenigstens eine der Rollen von einem Förderantrieb antreibbar ist. Das Förderelement kann auch mehrere quer zur Abzugsrichtung im Abstand zueinander angeordnete Riemen aufweisen, welche jeweils von einem Förderantrieb in Förderrichtung bewegt werden. Wenn das Förderelement mehrere nebeneinander angeordnete Riemen 13 aufweist, erstreckt sich das Schleusenelement zweckmäßig zumindest über den Abstand der beiden äußeren Riemen. Bei mehreren nebeneinander angeordneten Riemen ist es auch möglich, jedem Riemen ein Schleusenblech oder einen Abschnitt eines sich über die gesamte Breite des Förderelements zuzuordnen.

Zur Stabilisierung des Gutstapels umfasst der erfindungsgemäße Anleger zweckmäßig einen Stapelschuh, der an der Rückseite des Stapels angeordnet ist und an dem der Stapel rückseitig an- bzw. aufliegt. Der Stapelschuh weist zweckmäßig eine dem aufliegenden Stapel zugeneigte Stapelfläche auf, die schräg zur Förderfläche steht und auf der die Hinterkante des Stapels aufliegt. Durch Anheben oder Absenken des Stapelschuhs kann die Auflagefläche des untersten Guts des Gutstapels auf der Förderfläche variiert werden. Durch eine Änderung dieser Auflagefläche kann die Abzugskraft, mit der das Förderelement das unterste Gut aus dem Stapel herauszieht, angepasst werden.

Um auch eine Anpassung der Abzugskraft bei leicht durchbiegbaren Gütern (wie z. B. bei Einzelblättern) zu ermöglichen, kann in dem erfindungsgemäßen Anleger zweckmäßig auch eine Hubeinrichtung vorgesehen sein, mit welcher der rückwärtige Bereich des Stapels anhebbar bzw. in Bezug auf die Förderfläche absenkbar ist. Die Hubeinrichtung verfügt zweckmäßig über einen Exzenter-Mechanismus, mit dem die Hubeinrichtung um eine quer zur Abzugsrichtung liegende Schwenkachse verschwenkbar ist, um den Winkel des auf der Hubeinrichtung aufliegenden Stapels in Bezug auf die Förderfläche und damit die Abzugskraft des Förderelements einzustellen. In einem bevorzugten Ausführungsbeispiel weist die Hubeinrichtung eine Auflage auf, auf welcher der Stapel aufgelegt wird. Besonders zweckmäßig ist dabei eine rechenförmige Ausbildung der Auflage mit parallel zur Abzugsrichtung verlaufenden Zinken, wobei der oder die Riemen des Förderelements zwischen benachbarten Zinken angeordnet sind.

Diese und weitere Vorteile des erfindungsgemäßen Anlegers ergeben sich aus dem nachfolgend unter Bezugnahme auf die begleitenden Zeichnungen näher beschriebenen Ausführungsbeispielen. Die Zeichnungen zeigen:
- **Fig. 1:**: Schematische Darstellung eines erfindungsgemäßen Anlegers in einer perspektivischen Seitenansicht;
- **Fig. 2:**: Perspektivische Seitenansicht des Anlegers von Fig. 1 mit darin eingelegtem Güterstapel;
- **Fig. 3:**: Vorderansicht des Anlegers von Fig.1 in Abzugsrichtung in einer ersten Stellung des Anlegers;
- **Fig. 4:**: Vorderansicht des Anlegers von Fig.1 in Abzugsrichtung in einer zweiten Stellung des Anlegers;
- **Fig. 5:**: Vorderansicht einer weiteren Ausführungsform eines erfindungsgemäßen Anlegers, wobei Figur 5a den Anleger in einer ersten Stellung und Figur 5b den Anleger in einer zweiten Stellung zeigt;
- **Fig. 6:**: Vorderansicht einer weiteren Ausführungsform eines erfindungsgemäßen Anlegers, wobei Figur 6a den Anleger in einer ersten Stellung und Figur 6b den Anleger in einer zweiten Stellung zeigt;

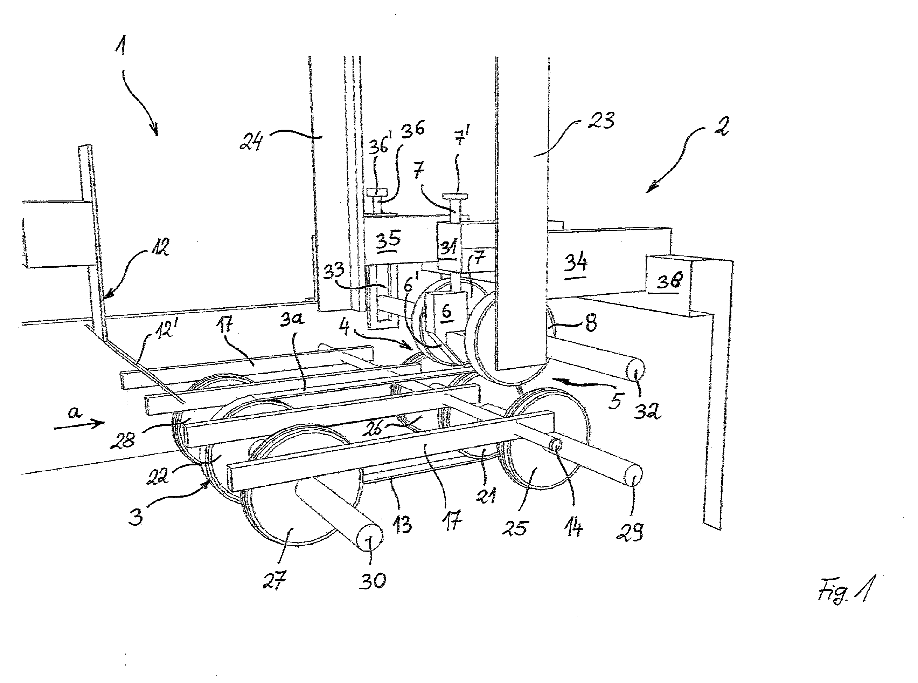

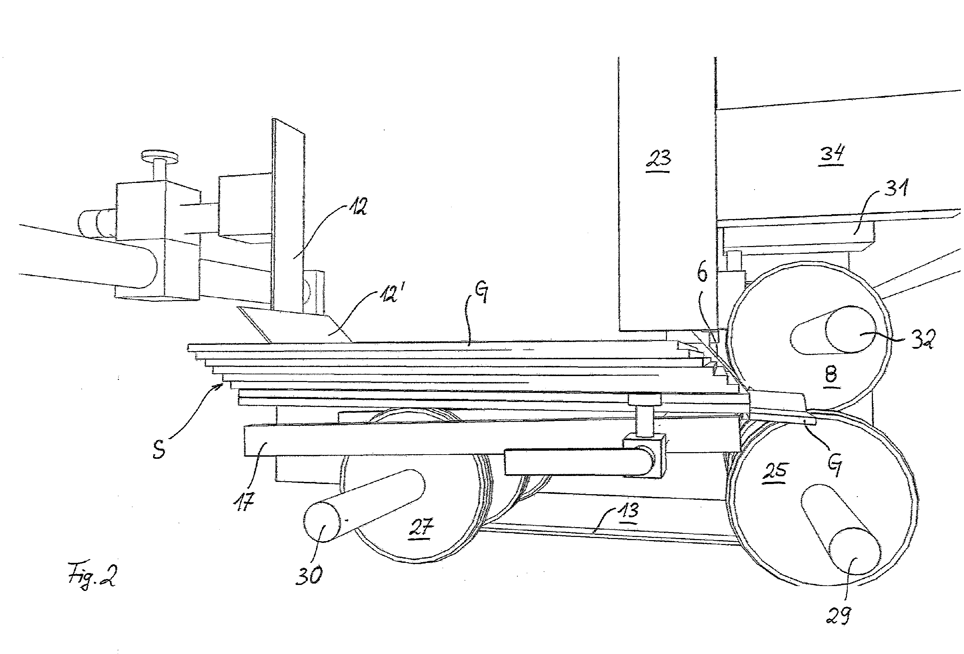

Der in Fig.1 schematisch gezeigte Anleger enthält ein Stapelfach 1 zur Aufnahme flacher Güter G in Form eines Stapels S. Aus Gründen der Übersichtlichkeit ist der Güterstapel S in Fig. 1 nicht gezeigt. Fig. 2 zeigt den Anleger von Fig. 1 mit darin eingelegtem Güterstapel S. Bei den Gütern G kann es sich bspw. um Einzelblätter aus Papier oder Karton handeln. Es kann sich bei den Gütern G auch um gefaltete Blätter oder Briefumschläge oder andere flache Güter wie z. B. Folien oder Plastikkarten handeln. Der erfindungsgemäße Anleger ist insbesondere zur Verwendung in einer Zusammentragbahn vorgesehen, um die in dem Stapelfach 1 enthaltenen Güter G zu vereinzeln und in vorgegebenen Sammelfächern der Zusammentragbahn abzulegen. Die in den Sammelfächern der Zusammentragbahn gesammelten Güter können dann bspw. einem Kuvertierer zugeführt werden, welcher die in einem Sammelfach zusammengetragenen Güter in einen Umschlag steckt, um bspw. eine Postsendung zu bilden.

Das Stapelfach 1 weist zwei im Wesentlichen vertikal stehende Führungsschienen 23, 24 auf, welche den vorderen Bereich des Stapelfachs 1 bilden. Die Führungsschienen 23, 24 dienen zur Führung und Stabilisierung eines in das Stapelfach 1 eingelegten Güterstapels S. Die Führungsschienen 23, 24 können auch leicht gegen die Vertikale geneigt sein. In der Regel wird der Anleger in einer geneigten Stellung bspw. in eine Zusammentragbahn eingebaut, so dass sich die Vorderkante des Stapels an den dadurch zur Vertikalen geneigten Führungsschienen 23, 24 abstützen kann.

Das Stapelfach 1 weist weiterhin einen Bodenbereich auf, der in dem hier zeichnerisch dargestellten Ausführungsbeispiel durch einen Rechen 17 gebildet ist, auf den ein Güterstapel S aufgelegt werden kann. Zweckmäßig ist der Rechen 17 mit einer in Fig. 1 nicht dargestellten Hubeinrichtung gekoppelt, über welche der Rechen 17 um eine Schwenkachse 14 verschwenkbar ist.

Am hinteren Ende des Stapelfachs 1 ist ein abnehmbarer Stapelschuh 12 angeordnet. Der Stapelschuh 12 weist eine nach vorne geneigte Stapelfläche 12'auf, auf welche die Hinterkanten der untersten Güter G des Stapels S aufgelegt und dadurch nach vorne gedrückt werden.

Der Anleger umfasst weiterhin eine Abzugseinrichtung 2 zum Abzug einzelner Güter G aus dem in das Stapelfach 1 eingelegten Güterstapel S entlang einer Abzugsrichtung a. Die Abzugseinrichtung 2 dient zum Vereinzeln der Güter G des Güterstapels S und zum Transport eines aus dem Stapel S abgezogenen Guts G in Abzugsrichtung a. Die Abzugseinrichtung 2 umfasst hierfür ein Förderelement 3 sowie eine Schleuse 4, durch welche die von dem Stapel S abgezogenen Güter G vereinzelt durchgeführt werden. Bei dem in Fig. 1 gezeigten Ausführungsbeispiel ist das Förderelement 3 von einem Riemen 13 gebildet, der über Rollen 20, 21 geführt ist. Wenigstens eine der beiden Rollen 20, 21 ist von einem hier nicht dargestellten Förderantrieb angetrieben, um den Riemen 13 in Abzugsrichtung a in Bewegung zu setzen. Das Obertrum des Riemens 13 definiert eine Förderfläche 3a, auf der die vom Stapel abgezogenen Güter G aufliegen. Das Obertrum des Riemens 13 ist, wie in Fig. 1 gezeigt, zwischen den Zinken des Rechens 17 angeordnet und die Förderfläche 3a liegt zumindest im vorderen Bereich höher als die Auflagefläche des Rechens 17. Der verschwenkbare Rechen 17 wird zum Abzug der Güter G aus dem Güterstapel S so eingestellt, dass das unterste Gut G des Güterstapels S zumindest im vorderen Bereich des Stapelfachs 1 auf der Förderfläche 3a des Förderelements 3 aufliegt, so dass der sich in Förderrichtung a bewegende Riemen 3 das unterste Gut G aufgrund der Haftreibung aus dem Stapel S in Abzugsrichtung a abziehen kann. Bei dem Riemen 13 handelt es sich bspw. um einen Friktionsriemen mit einer glatten Oberfläche. Es kann sich jedoch auch um einen Riemen mit strukturierter Oberfläche oder einen Saugriemen handeln. Zweckmäßig ist der Riemen 14 aus einem elastischen, nachgiebigen Material, bspw. aus einem weichen Kunststoffmaterial oder einem Gummimaterial gebildet. Das Förderelement 3 kann auch noch weitere Riemen enthalten, welche quer zur Abzugsrichtung a im Abstand zueinander angeordnet sein können. Statt eines angetriebenen Riemens kann das Förderelement auch Antriebsrollen oder -walzen enthalten.

Bei dem in Fig. 1 dargestellten Ausführungsbeispiel umfasst die Abzugseinrichtung 2 noch zwei weitere Rollenpaare mit Rollen 25, 26 sowie 27 und 28, wobei das vordere Rollenpaar mit den Rollen 25 und 26 auf einer Rollenachse 29 angeordnet ist, auf der auch die vordere Antriebsrolle 21 des Förderelements 3 angeordnet ist. Das vordere Rollenpaar 25, 26 bildet untere Leitelemente einer später noch beschriebenen Welleneinrichtung. Das hintere Rollenpaar mit den Rollen 27 und 28 ist auf einer Rollenachse 30 befestigt, auf der auch die hintere Antriebsrolle 22 des Förderelements 3 angeordnet ist.

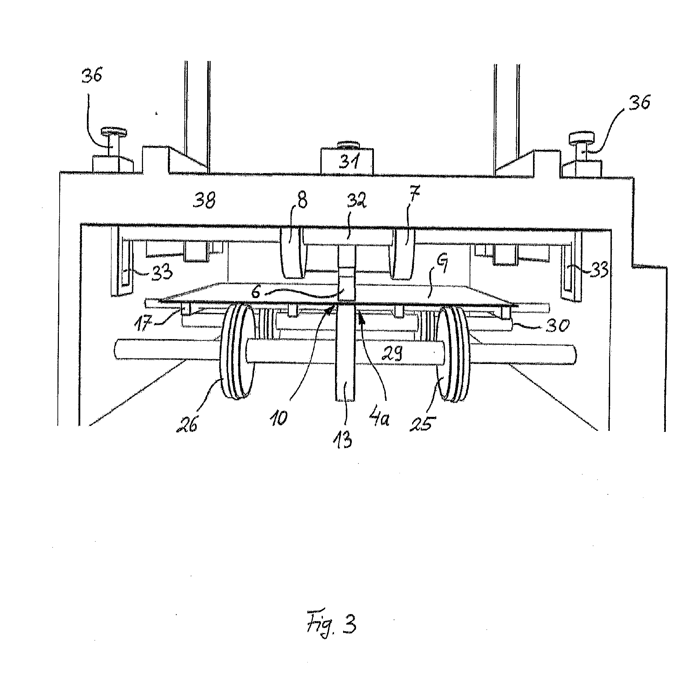

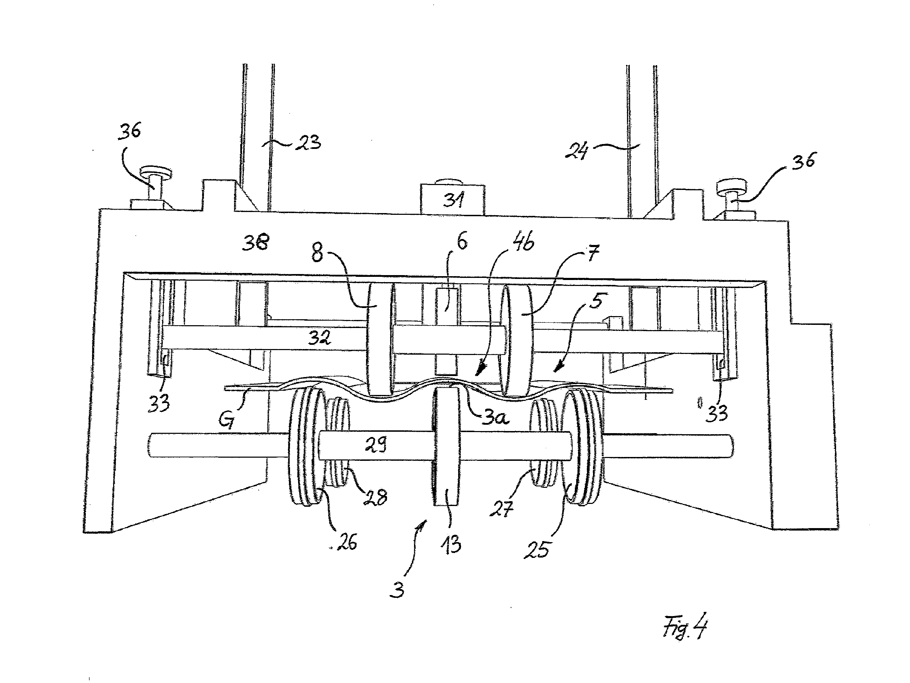

Die Abzugseinrichtung 2 des erfindungsgemäßen Anlegers umfasst eine Schleuse 4, durch welche die von dem Stapel S angezogenen Güter G vereinzelt durch das Förderelement 3 durchgeführt werden. Die Schleuse 4 ist dabei wechselbar entweder von einem ersten Schleusenelement 4a (Figur 3) oder von einem zweiten Schleusenelement (Figur 4) gebildet, wobei ein Bediener des Anlegers mit dem nachfolgend beschriebenen Mechanismus einstellen kann, durch welche der beiden Schleuseneinrichtungen (4a, 4b) die von dem Stapel S vereinzelt abgezogenen Güter G durchgeschleust werden sollen.

Die erste Schleuseneinrichtung 4a des erfindungsgemäßen Anlegers umfasst ein oberhalb der Förderfläche 3a angeordnetes Schleusenelement 6. Bei dem Schleusenelement 6 kann es sich bspw. um eine Schleusenrolle oder um ein Schleusenblech handeln. Bei dem in Fig. 1 gezeigten Ausführungsbeispiel des erfindungsgemäßen Anlegers ist das Schleusenelement 6 durch ein Schleusenblech gebildet, welches oberhalb des Obertrums des Riemens 13 und mit dem Riemen 13 fluchtend angeordnet ist. Das Schleusenelement 6 weist eine nach vorne geneigte Anschlagfläche 6'auf, an der die Vorderkante des unteren Bereichs des Güterstapels S anliegt. Das Schleusenelement 6 ist über eine Spindel 7 an einem feststehenden Rahmenteil 31 befestigt. An der Oberseite der Spindel 7 ist ein Rändelrad 7' angeordnet, um die Spindel 7 in das Rahmenteil 31 hinein oder herauszudrehen. Durch Drehen der Spindel 7 kann die Höhe des Schleusenelements 6 und damit dessen Abstand zur Förderfläche 3a stufenlos auf einen gewünschten Wert eingestellt werden. Zwischen der Unterseite des Schleusenelements 6 und der Förderfläche 3a, welche durch die Oberfläche des Obertrums des Riemens 13 gebildet ist, wird dadurch ein Schleusenspalt 10 definiert, dessen Spaltweite durch Einstellen der Höhe des Schleusenelements 6 mittels der Spindel 7 variabel ist. Das Schleusenelement 6 bildet dadurch mit dem Förderelement 3 und insbesondere mit dem Riemen 13 eine erste Schleuseneinrichtung 4a, durch welche ein von dem Stapel S abgezogenes Gut vereinzelt durchgeführt werden kann.

Zur Einstellung des Abstands des Schleusenelements 6 in Bezug auf die Förderfläche 3a kann auch eine per Hand verstellbare und in einer gewünschten Grundstellung (aktive oder passive Grundstellung) fixierbare Haltestange und zusätzlich zur Feinjustierung eine Spindel vorgesehen sein. Dies erleichtert und beschleunigt die Umstellung des Schleusenelements 6 von seiner aktiven Grundstellung in seine passive Grundstellung, und umgekehrt. Insbesondere die Feineinstellung des Abstands des Schleusenelements 6 in Bezug auf die Förderfläche 3a in der aktiven Grundstellung erfolgt dann zweckmäßig mit der Spindel, um eine gewünschte Weite des Schleusenspalts 10 einzustellen.

Zur Ausbildung einer zweiten Schleuseneinrichtung 4b umfasst die Abzugseinrichtung 2 wenigstens ein oberhalb der Förderfläche 3a angeordnetes Leitelement 7. Bei dem in Fig. 1 dargestellten Ausführungsbeispiel des erfindungsgemäßen Anlegers sind zwei obere Leitelemente 7, 8 in Form von Leitrollen vorgesehen, welche im Abstand zueinander auf einer gemeinsamen Leitelementwelle 32 angeordnet sind. Zweckmäßig ist die Leitelementwelle 32 drehbar in einem Führungslager 33 gelagert. Das Führungslager 33 ist dabei durch zwei Führungsnuten gebildet, welche an zwei seitlichen Rahmenteilen 34, 35 angeordnet sind. Die seitlichen Rahmenteile 34 und 35 sind mit den Führungsschienen 23, 24 des Stapelfachs verbunden und an einem feststehenden Querträger 36 befestigt. An dem feststehenden Querträger 36 ist auch das Rahmenteil 31 befestigt, an dem das Schleusenelement 6 verschiebbar angelenkt ist. In Fig. 1 ist die Führungsnut des Führungslagers 33 auf der rechten Seite aus Gründen der Übersichtlichkeit nicht dargestellt. Die Leitelementwelle 32 ist in dem Führungslager 33 über eine Spindel 26 verschiebbar gelagert. An der Oberseite der Spindel 36 ist ein Rändelrad 36' befestigt, mit dem die Lage (Höhe) der Leitelementwelle 32 in dem Führungslager 33 stufenlos einstellbar ist. Mittels der Spindel 36 kann der Abstand der oberen Leitelemente 7, 8 zur Förderfläche 3a stufenlos verstellt und auf einen gewünschten Wert eingestellt werden.

Die beiden oberhalb der Förderfläche 3a angeordneten Leitelemente 7, 8 wirken mit den Rollen 25 und 26 zusammen, um eine Welleneinrichtung 5 zu bilden. Die Rollen 25, 26 wirken dabei als untere Leitelemente. Zur Ausbildung der Welleneinrichtung 5 wird die Leitelementwelle 32 so weit nach unten verschoben, dass die Unterseite der oberen Leitelemente 7, 8 (welche durch den Außenumfang der Rollen der Leitelemente 7, 8 definiert ist) unterhalb der Oberseite der unteren Leitelemente (Rollen 25, 26) liegt. Bei einer derartigen Einstellung der oberen Leitelemente 7, 8 in Bezug auf die Leitelemente 25, 26 und in Bezug auf die Förderfläche 3a, wird ein Gut, das durch die durch Welleneinrichtung 5 geführt wird, die durch die Leitelemente 7, 8 sowie 25, 26 ausgebildet ist, wellenförmig verformt und dadurch beim Durchschleusen durch die Welleneinrichtung stabilisiert. Die Welleneinrichtung 5 bildet in dieser Stellung der verschiebbaren Leitelemente 7, 8 eine zweite Schleuseneinrichtung 4b, durch welche ein von dem Güterstapel S abgezogenes Gut vereinzelt durchgeführt werden kann, wobei das Gut beim Durchführen durch diese Schleuseneinrichtung wellenförmig verformt wird.

Der erfindungsgemäße Anleger zeichnet sich nun dadurch aus, dass ein Bediener auswählen kann, durch welche der beiden Schleuseneinrichtungen (4a, 4b) die von dem Güterstapel S abgezogenen Güter G vereinzelt durchgeführt werden sollen. Hierfür ist sowohl das Schleusenelement 6 als auch die oberen Leitelemente 7, 8 in Bezug auf die Förderfläche 3a verschiebbar, um den Abstand des Schleusenelements 6 von der Förderfläche 3a und den Abstand der oberen Leitelemente 7, 8 von der Förderfläche 3a unabhängig voneinander einstellen zu können.

Das Schleusenelement 6 ist in Bezug auf die Förderfläche 3a unabhängig von der Stellung der oberen Leitelemente 7, 8 mittels der Spindel 7 zwischen einer aktiven Grundstellung und einer passiven Grundstellung verschiebbar. In seiner aktiven Grundstellung bildet das Schleusenelement 6 mit der Förderfläche 3a einen schmalen Schleusenspalt 10 aus, durch den (nur) vereinzelte Güter G durchgeführt werden können.

In Fig. 3 ist der erfindungsgemäße Anleger in dieser aktiven Grundstellung des Schleusenelements 6 gezeigt. Die Unterseite des Schleusenelements 6 definiert dabei mit der Förderfläche 3a einen schmalen Schleusenspalt 10, der so schmal ist, dass lediglich ein einziges Gut G durchgeschoben werden kann. In dieser aktiven Grundstellung des Schleusenelements 6 befindet sich die Welleneinrichtung 5 mit den oberhalb der Förderfläche 3a angeordneten oberen Leitelementen 7, 8 in einer passiven Grundstellung, in der die Leitelemente 7, 8 so weit von der Förderfläche 3a abgehoben sind, dass die oberen Leitelemente 7, 8 ein durch die Schleuse 4 gebildetes Gut G nicht in Eingriff nehmen (und insbesondere nicht wellenförmig verformen). Die Schleuse 4, durch welche ein von Gutstapel S abgezogenes Gut vereinzelt durchgeführt wird, wird in dieser Stellung des erfindungsgemäßen Anlegers durch die erste Schleuseneinrichtung 4a gebildet, welche durch das Zusammenwirken des Schleusenelements 6 mit dem Förderelement 3 ausgebildet ist. Soll ein von dem Gutstapel S abgezogenes Gut hingegen beim Durchschleusen durch die Schleuse 4 wellenförmig verformt werden, wird der erfindungsgemäße Anleger so eingestellt, dass die Schleuse 4 durch die zweite Schleuseneinrichtung 4b gebildet wird, welche durch die Welleneinrichtung 5 ausgebildet ist. Diese Stellung des erfindungsgemäßen Anlegers ist in Fig. 4 gezeigt. Dort befindet sich das Schleusenelement 6 in seiner passiven Grundstellung, in der es so weit von der Förderfläche 3a abgehoben ist und der Schleusenspalt 10 so weit geöffnet ist, dass ein Gut G ohne Eingriff des Schleusenelements 6 durchgeführt werden kann. Das Schleusenelement 6 befindet sich hier in seiner passiven Grundstellung. Gleichzeitig befindet sich die Welleneinrichtung 5 mit den Leitelementen 7, 8 in seiner aktiven Grundstellung, in der die oberen Leitelemente 7, 8 und die unteren Leitelemente (Rollen 25, 26) sowie das Förderelement 3 (Riemen 13) ein durch die Schleuse 4 geführtes Gut in Eingriff nehmen und wellenförmig verformen, wie in Fig. 4 gezeigt.

In dieser Stellung des Anlegers befindet das Schleusenelement 6 in seiner passiven Grundstellung und die Welleneinrichtung 5 in ihrer aktiven Grundstellung (Figur 4). Die Schleuse 4, durch welche die vereinzelt vom Stapel S abgezogenen Güter durchgeschleust werden, wird in dieser Stellung durch die zweite Schleuseeinrichtung 4b (Welleneinrichtung 5) ausgebildet, welche ein durchgeführtes Gut G in Eingriff nimmt und wellenförmig verformt.

Die Erfindung ist nicht auf das zeichnerisch dargestellte Ausführungsbeispiel beschränkt. So ist es z. B. möglich, das Schleusenelement 6 in seiner aktiven Grundstellung in Bezug auf die Förderfläche 3a so anzuordnen, dass die Unterseite des Schleusenelements 6 auf der Förderfläche 3a aufliegt, so dass der Schleusenspalt 10 in der aktiven Grundstellung des Schleusenelements 6 zunächst geschlossen ist, solange keine Gut G durch den Schleusenspalt geleitet wird. Zweckmäßig ist das Schleusenelement 6 in diesem Ausführungsbeispiel federnd gegen die Rückstellkraft eines Federelements gelagert. Wenn ein vom Stapel S abgezogenes Gut G durch den Schleusenspalt 10 zwischen dem Schleusenelement 6 und der Förderfläche 3a durchgeschleust werden soll, hebt ein von dem Förderelement 3 in Abzugsrichtung a gefördertes Gut G das Schleusenelement 6 gegen die Rückstellkraft des Federelements an, um den Schleusenspalt 10 zu öffnen. Die Rückstellkraft des Federelements sorgt dafür, dass das Schleusenelement 6 in Richtung der Förderfläche 3a gedrückt wird und verhindert dadurch, dass mehr als ein Gut durch den Schleusenspalt 10 geführt werden kann. Dadurch werden Doppelabzüge verhindert.

Statt der Federlagerung des Schleusenelements 6 kann auch ein Förderelement 3 mit einem weichen und nachgiebigen Riemen 13 gewählt werden. Das Schleusenelement 6 kann in seiner aktiven Grundstellung dann so eingestellt werden, dass die Unterseite des Schleusenelements 6 in die Oberfläche des nachgiebigen Riemens 13 verformend eingreift. Beim Durchführen eines Guts G zwischen dem Schleusenelement 6 und der Förderfläche 3a gräbt sich das Gut in die weiche Oberfläche des Riemens 13 ein und kann dadurch einen schmalen Schleusenspalt 10 zwischen der Unterseite des Schleusenelements 6 und der Förderfläche 3a (Oberfläche des Riemens 13) öffnen, durch den das Gut durchgeschleust werden kann.

Zweckmäßig bewegen sich die Leitelemente 7, 8 der Welleneinrichtung 5 im Gegenlauf zur Anzugsrichtung a. Hierfür können bspw. die als Rollen ausgebildeten oberen Leitelemente 7,8 drehbar auf der Welle 32 gelagert sein. Es ist auch möglich, die als Rollen ausgebildeten Leitelemente 7, 8 an der Welle 32 zu befestigen und die Welle 32 drehbar in dem Führungslager 33 zu lagern. Hierbei kann die Welle 32 auch aktiv von einem Wellenantrieb im Gegenlauf zur Abzugsrichtung a angetrieben werden, um die oberen Leitelemente 7, 8 drehend anzutreiben. Bevorzugt werden die oberen Leitelemente 7, 8 dabei intermittierend von dem Antrieb im Gegenlauf zur Abzugsrichtung a in Drehung versetzt.

Das Schleusenelement 6 kann auch an der Leitelementwelle 32 verschiebbar gelagert sein.

Wenn das Förderelement 3 mehrere quer zur Abzugsrichtung a im Abstand zueinander angeordnete Riemen umfasst, ist es zweckmäßig, wenn sich das Schleusenelement 6 zumindest über den Abstand der beiden äußersten Riemen erstreckt. Das Schleusenelement 6 kann hierfür zweckmäßig als Schleusenrolle ausgebildet sein. Auch der Stapelschuh 12 erstreckt sich zweckmäßig über die gesamte Breite der Fördereinrichtung 3, um dem Stapel S über die gesamte Breite ein möglichst gute Unterstützung zu bieten. Die nach vorne geneigte Stapelfläche des Stapelschuhs verläuft zweckmäßig parallel zu der ebenfalls nach vorne geneigten Anschlagfläche 6'des Schleusenelements 6. Dadurch wird eine gute Anlage des Stapels S am Schleusenelement 6 gewährleistet.

Die Anschlagfläche 6'des Schleusenelements 6 wirkt bevorzugt sowohl in der aktiven Grundstellung als auch in der passiven Grundstellung des Schleusenelements 6 als Anschlag für die Vorderkante des Stapels S. In der passiven Grundstellung des Schleusenelements 6 sorgt dieser Anschlag dafür, dass der im Stapelfach 1 abgelegte Güterstapel S keinen Druck auf die oberen Leitelemente 7, 8 ausübet, wenn sich diese in ihrer aktiven Grundstellung (aktive Grundstellung der Welleneinrichtung 5) befinden, um ein Gut G in Eingriff zu nehmen und wellenförmig zu verformen. Dies ist insbesondere dann vorteilhaft, wenn die oberen Leitelemente 7, 8 als Rollen ausgebildet sind und im Gegenlauf zur Abzugsrichtung a drehend angetrieben werden. Durch den Anschlag, der durch die Anschlagfläche 6' des Schleusenelements 6 gebildet ist, übt der Güterstapel S keinen Druck auf die oberen Leitelemente 7, 8 auf, wodurch sich diese ohne Behinderung frei drehen können.

Die Welleneinrichtung 5 enthält wenigstens ein oberhalb der Förderfläche 3a angeordnetes Leitelement, wobei dieses als Rolle oder auch als Leitblech ausgebildet sein kann. Es können jedoch auch mehrere obere Leitelemente 7, 8 vorgesehen sein, welche sich quer zur Abzugsrichtung a im Abstand zueinander erstrecken. Entsprechend kann auch nur ein unteres Leitelement, oder auch mehrere untere Leitelemente 25, 26 vorgesehen sein. Durch die Anzahl der Leitelemente 7, 8; 25, 26 der Welleneinrichtung 5 wird die Anzahl der Wellen (Berge bzw. Täler) in dem Gut G bestimmt, welches durch die Welleneinrichtung 5 in ihrer aktiven Grundstellung in ein durchgeführtes Gut G einbringt.

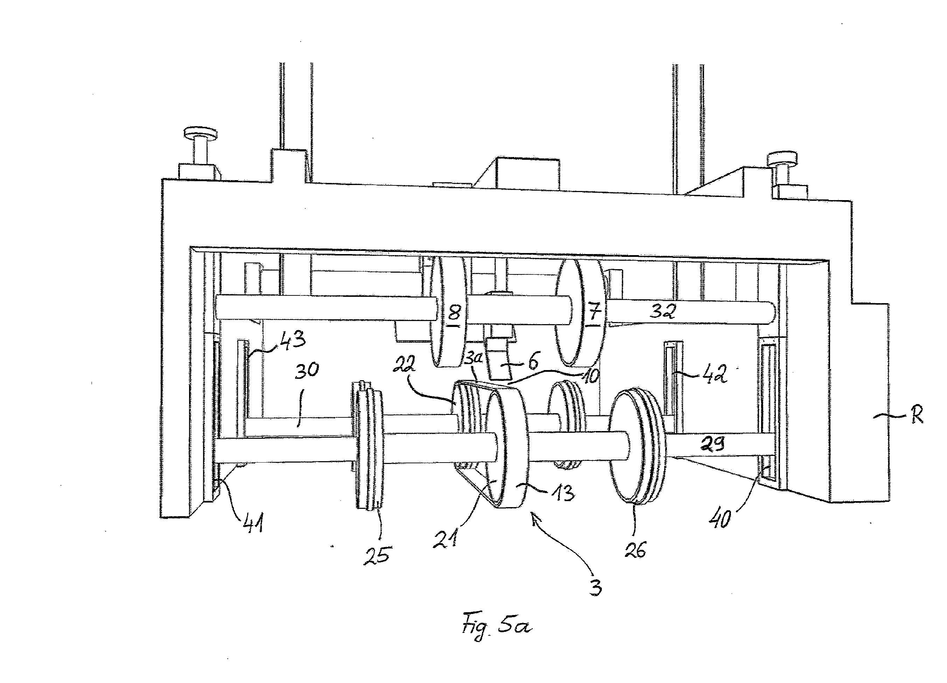

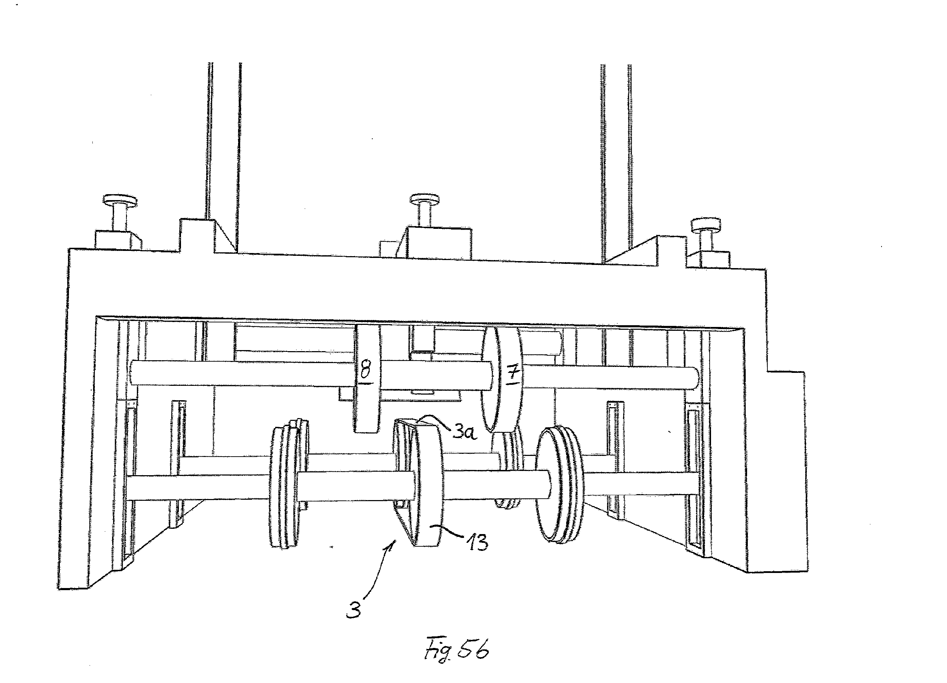

In Figur 5 ist eine weitere Ausführungsform eines erfindungsgemäßen Anlegers gezeigt. In dieser Ausführungsform ist das Förderelement 3 verschiebbar an einem feststehenden Rahmen R angeordnet. Weiterhin ist - wie bei den vorstehend beschrieben Ausführungsbeispielen - das Schleusenelement 6 verschiebbar. Die oberen Leitelemente 7, 8 der Welleneinrichtung 5 sind dagegen am Rahmen R fixiert. Zum Verschieben der Fördereinrichtung 3 in Bezug auf das Schleusenelement 6 und die oberen Leitelemente 7, 8 der Welleneinrichtung 5 sind die Wellen 29, 30, auf denen die Rollen 21 und 22 der Fördereinrichtung 3 gelagert sind in Führungsnuten 40, 41; 42, 43 verschiebbar gelagert. Die Führungsnuten 40, 41; 42, 43 sind an Rahmenteilen des feststehenden Rahmens R angeordnet und erstrecken sich dort in vertikaler Richtung. Durch Verschieben der Wellen 29, 30 kann die Lage des Förderelements 3 mit dem Riemen 13 und den Rollen 21, 22 in Bezug auf die fest stehenden Leitelemente 7, 8 der Welleneinrichtung 5 und das Schleusenelement 6 verschoben werden.

Durch Verschieben des Förderelements 3 nach oben oder unten kann der Abstand der Förderfläche 3a in Bezug auf das Schleusenelement 6 und in Bezug auf die oberen Leitelemente 7, 8 zweckmäßig stufenlos auf einen gewünschten Wert eingestellt werden. Dadurch kann ausgewählt werden, ob die von dem Stapel S abgezogenen Güter G entweder durch die erste Schleuseneinrichtung 4a oder durch die zweite Schleuseneinrichtung 4b durchgeschleust werden. In der in Figur 5a gezeigten Stellung ist das Schleusenelement 6 soweit nach unten verschoben, dass seine Unterkante unterhalb der Unterkante der oberen Leitelemente 7, 8 liegt. Das Förderelement 3 ist dabei in einer Stellung angeordnet, in der die Förderfläche 3a mit der Unterkante des Schleusenelements 6 einen schmalen Schleusenspalt 10 bildet, durch den nur einzelne, vom Stapel S abgezogenen Güter G durchgeführt werden können. In der in Figur 5b gezeigten Stellung des Anlegers ist das verschiebbare Schleusenelement 6 soweit nach oben verschoben, dass sich der Schleusenspalt 10 weit öffnet, wodurch das Schleusenelement 6 und damit die erste Schleuseneinrichtung 4a in ihre passive Grundstellung gebracht wird. Gleichzeitig ist das Förderelement 3 in Bezug auf die feststehenden oberen Leitelemente 7, 8 soweit nach oben verschoben, dass die Unterkante der oberen Leitelemente 7, 8 unterhalb der Förderfläche 3a zu liegen kommt. Dadurch ist die Welleneinrichtung 5 und damit die zweite Schleuseneinrichtung 4b in ihre aktive Grundstellung gebracht, in der sie ein durch diese Schleuseneinrichtung 4b durchgeschleustes Gut in Eingriff nimmt und wellenförmig verformt.

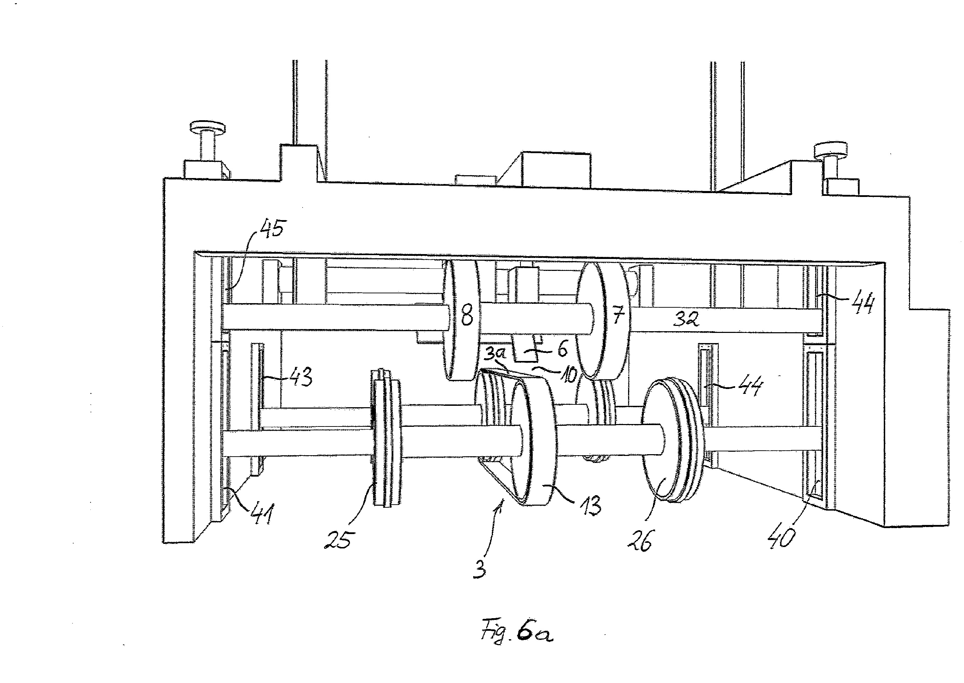

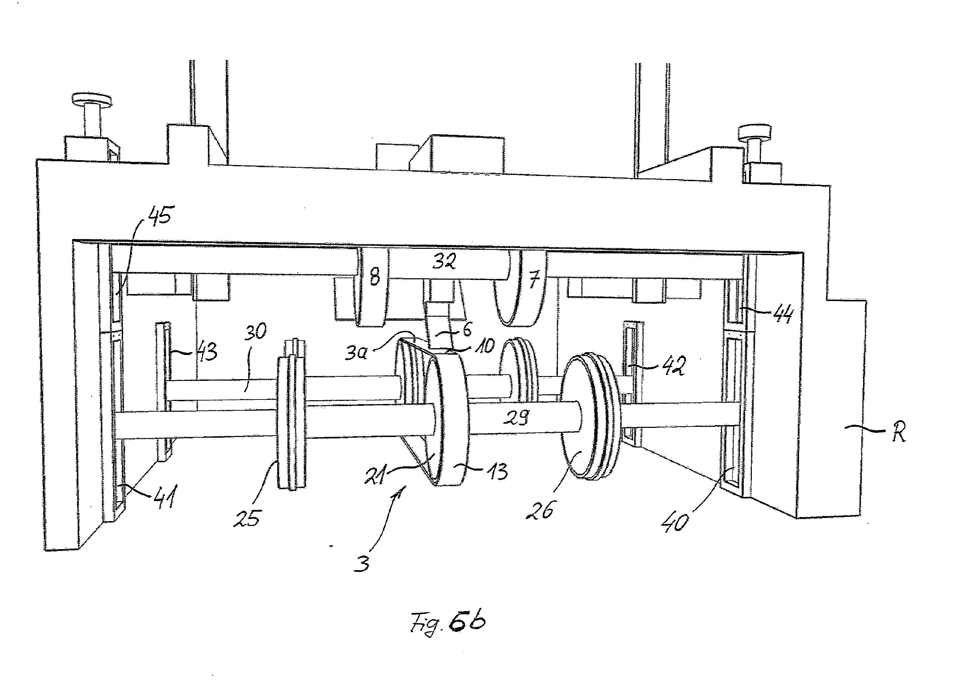

In Figur 6 ist eine weitere Ausführungsform eines erfindungsgemäßen Anlegers gezeigt. Bei dieser Ausführungsform ist das Schleusenelement 6 am Rahmen R in einer festen Position fixiert. Das Förderelement 3 ist wie in der Ausführungsform von Figur 5 verschiebbar am Rahmen R angeordnet. Anders als bei der Ausführungsform von Figur 5 ist in der Ausführungsform von Figur 6 auch die Welle 32, welche die oberen Leitelemente 7, 8 der Welleneinrichtung 5 trägt, verschiebbar am Rahmen R angeordnet. Zum Verschieben der Welle 32 sind am Rahmen R weitere Führungen 44, 45 vorgesehen, in denen die Enden der Welle 32 verschiebbar gelagert sind.

In der in Figur 6a gezeigten Stellung ist das Förderelement 3 in Bezug auf das feststehende Schleusenelement 6 soweit nach unten verschoben, dass sich ein breiter Schleusenspalt 10 zwischen der Unterkante des Schleusenelements 6 und der Förderfläche 3a einstellt. Der Schleusenspalt 10 ist in dieser Stellung so weit geöffnet, dass sich das Schleusenelement 6 und damit die erste Welleneinrichtung 4a in ihrer passiven Grundstellung befindet. Gleichzeitig ist die Welle 32 mit den darauf angeordneten Leitelementen 7, 8 in Bezug auf das Förderelement 3 soweit nach unten geschoben, dass die Unterkante der oberen Leitelemente 7, 8 unterhalb der Förderfläche 3a liegt. Die Welleneinrichtung 5 ist dadurch in ihre aktive Grundstellung gebracht, in der sie ein durch die zweite Schleuseneinrichtung 4b durchgeschleustes Gut G in Eingriff nimmt und wellenförmig verformt.

In der in Figur 6b gezeigten Stellung ist das Förderelement 3 in Bezug auf das feststehende Schleusenelement 6 soweit nach oben geschoben, dass sich zwischen der Unterkante des Schleusenelements 6 und der Förderfläche 3a ein schmaler Schleusenspalt 10 ausbildet, durch den nur einzelne Güter G durchgeführt werden können. Das Schleusenelement 6 und damit die erste Schleuseneinrichtung 4a befindet sich in dieser Stellung in ihrer aktiven Grundstellung. Gleichzeitig ist die Welle 32 mit den darauf angeordneten oberen Leitelementen 7, 8 in Bezug auf die Förderfläche 3a soweit angehoben, dass die Unterkante der Leitelemente 7, 8 oberhalb der Förderfläche 3a liegt. Die Welleneinrichtung 5 mit den oberen Leitelementen 7, 8 ist in dieser Stellung in ihrer passiven Grundstellung. Ein durch die Schleuse durchgeschleustes Gut G wird deshalb beim Durchschleusen jedenfalls nicht wellenförmig verformt.

Die Erfindung ist nicht auf die zeichnerisch dargestellten Ausführungsformen beschränkt. So ist es bspw. möglich, statt der beiden oberen Leitelemente 7, 8 nur ein einziges oberes Leitelement oder auch mehr als zwei obere Leitelemente zu verwenden. Entsprechend können auch weniger oder mehr als zwei untere Leitelemente eingesetzt werden. Auf die unteren Leitelemente kann auch ganz verzichtet werden. Die Welleneinrichtung 5 wird dann durch das Zusammenwirken der oberen Leitelemente 7, 8 mit dem Förderelement (Riemen 13) ausgebildet. Als besonders geeignet haben sich jedoch Welleneinrichtungen 5 mit vier oberen Leitelemente und zwei unteren Leitelemente erwiesen. Das Förderelement 3 kann neben einem zentralen Band oder Riemen 13 noch weitere Bänder, Riemen oder Rollen umfassen, welche insbesondere zur Unterstützung breiter Güter seitlich neben und im Abstand zu dem zentralen Band oder Riemen angeordnet sein können. Als besonders zweckmäßig hat sich hierfür ein Förderelement 3 mit einem zentralen, über zwei Rollen 21, 22 umlaufenden Riemen 13 und zwei seitlichen dünnen Unterstützungsriemen erwiesen, welche ebenfalls auf Rollen umlaufen, die an derselben Welle gelagert sind, auf der auch die Rollen 21, 22 des zentralen Riemens angeordnet sind.

In einem weiteren, hier nicht zeichnerisch dargestellten Ausführungsbeispiel ist es auch möglich, sowohl das Förderelement 3 als auch die oberen Leitelemente 7, 8 der Welleneinrichtung 5 und auch das Schleusenelement 6 verschiebbar auszugestalten. Dadurch werden noch mehr Möglichkeiten zur Einstellung geboten.

Zur Einstellung der aktiven bzw. passiven Grundstellungen der ersten und der zweiten Schleuseneinrichtung ist es auch möglich, das Schleusenelement in Bezug auf die Förderfläche in einem festen Abstand zu fixieren und lediglich das oder jedes Leitelement der Welleneinrichtung in Bezug zur Förderfläche verschiebbar auszubilden, um den Abstand des oder jedes Leitelements zur Förderfläche auf einen geeigneten Wert einzustellen und die Welleneinrichtung in eine aktive oder eine passive Grundstellung zu bringen.

## Patentansprüche

1. Anleger für flache Güter, insbesondere Beilagenanleger für Beilagen, mit einem Stapelfach (1) zur Aufnahme der Güter (G) in Form eines Stapels (S) und einer Abzugseinrichtung (2) zum Abzug einzelner Güter (G) aus dem Stapel (S) entlang einer Abzugsrichtung (a), wobei die Abzugseinrichtung (2) ein Förderelement (3) mit einer Förderfläche (3a) und eine Schleuse (4) umfasst, durch welche die von dem Stapel (S) abgezogenen Güter (G) mittels des Förderelements (3) vereinzelt durchgeführt werden, wobei die Schleuse (4) eine erste Schleuseneinrichtung (4a) und eine zweite Schleuseneinrichtung (4b) umfasst und ein von dem Stapel (S) abgezogenes Gut (G) beim Durchführen durch die Schleuse (4) entweder mit der ersten Schleuseneinrichtung (4a) oder mit der zweiten Schleuseneimichtung (4b) in Eingriff gebracht wird, **dadurch gekennzeichnet, dass** die zweite Schleuseneinrichtung (4b) eine Welleneinrichtung (5) mit wenigstens einem oberhalb der Förderfläche (3a) angeordneten Leitelement (7, 8) umfasst, welches ein durch die Welleneinrichtung (5) geführtes Gut (G) wellenförmig verformt, wenn das Gut (G) mit der zweiten Schleuseneinrichtung (4b) in Eingriff gebracht wird.

2. Anleger nach Anspruch 1, **dadurch gekennzeichnet, dass** die erste Schleuseneinrichtung (4a) ein oberhalb der Förderfläche (3a) angeordnetes Schleusenelement (6) umfasst, welches mit dem Förderelement (3) einen Schleusenspalt (10) mit veränderlicher Spaltweite bildet, durch den ein von dem Stapel (S) abgezogenes Gut (G) im Wesentlichen ohne Einbringen einer Wellenform durchgeführt wird, wenn das Gut (G) mit der ersten Schleuseneinrichtung (4a) in Eingriff gebracht wird.

3. Anleger nach einem der voranstehenden Ansprüche, **dadurch gekennzeichnet, dass** die erste Schleuseneinrichtung (4a) in eine aktive Grundstellung bringbar ist, in der sie ein von dem Stapel (S) abgezogenes Gut (G) in Eingriff nimmt, um es durch die Schleuse (4) durchzuführen und dass die zweite Schleuseneinrichtung (4b) gleichzeitig in eine passive Grundstellung bringbar ist, in der sie außer Eingriff mit einem abgezogenen Gut (G) steht, wenn dieses durch die Schleuse (4) durchgeführt wird, und umgekehrt.

4. Anleger nach einem der Ansprüche 2 oder 3, **dadurch gekennzeichnet, dass** sowohl das Schleusenelement (6) als auch das oberhalb der Förderfläche (3a) angeordnete Leitelement (7, 8) unabhängig voneinander in Bezug auf die Förderfläche (3a) verschiebbar sind, um den Abstand des Schleusenelements (6) von der Förderfläche (3a) unabhängig vom Abstand des Leitelements (7, 8) einzustellen.

5. Anleger nach einem der Ansprüche 2 bis 4, **dadurch gekennzeichnet, dass** der Abstand zwischen dem Schleusenelement (6) und der Förderfläche (3a) zwischen einer aktiven Grundstellung und einer passiven Grundstellung veränderbar ist, wobei das Schleusenelement (6) in der aktiven Grundstellung mit der Förderfläche (3a) einen schmalen Schleusenspalt (10) bildet, durch den nur vereinzelte Güter (G) durchgeführt werden können und in seiner passiven Grundstellung so weit von der Förderfläche (3a) abgehoben ist, dass der Schleusenspalt (10) weit geöffnet ist, so dass durch die Schleuse (4) durchgeschleuste Güter (G) außer Eingriff mit dem Schleusenelement (6) bleiben.

6. Anleger nach einem der voranstehenden Ansprüche, **dadurch gekennzeichnet, dass** die Welleneinrichtung (5) untere Leitelemente (25, 26) und obere Leitelemente (7, 8) aufweist, wobei die oberen Leitelemente (7, 8) oberhalb der Förderfläche (3a) angeordnet sind und ihr Abstand zur Förderfläche (3a) und/oder zu den unteren Leitelementen (25, 26) veränderbar ist.

7. Anleger nach Anspruch 6, **dadurch gekennzeichnet, dass** die oberen Leitelemente (7, 8) der Welleneinrichtung (5) zwischen einer ersten aktiven Grundstellung und einer zweiten passiven Grundstellung verschiebbar sind, wobei die oberen Leitelemente (7, 8) in der aktiven Grundstellung mit den unteren Leitelementen (25, 26) und/oder mit dem Förderelement (3) ein durch die Welleneinrichtung (5) geführtes Gut in Eingriff nehmen und wellenförmig verformen und die oberen Leitelemente (7, 8) in der passiven Grundstellung soweit von der der Förderfläche (3a) abgehoben sind, dass ein durch die Welleneinrichtung (5) geführtes Gut ohne Verformung durch die Schleuse (4) durchgeführt wird.

8. Anleger nach einem der Ansprüche 5 bis 7, **dadurch gekennzeichnet, dass** das Schleusenelement (6) in seiner aktiven Grundstellung auf der Förderfläche (3a) aufliegt und der Schleusenspalt (10) in dieser Stellung geschlossen ist, wenn kein Gut (G) durch die Schleuse (4) geführt wird.

9. Anleger nach einem der Ansprüche 2 bis 8, **dadurch gekennzeichnet, dass** das Schleusenelement (6) eine dem Gutstapel (S) zugewandte und schräg zur Förderfläche (3a) stehende Anschlagfläche (6') aufweist, an welcher die Vorderkante des Gutstapels (S) anliegt.

10. Anleger nach Anspruch 9, **dadurch gekennzeichnet, dass** die Anschlagfläche (6') sowohl in der aktiven Grundstellung als auch in der passiven Grundstellung des Schleusenelements (6) einen Anschlag für die Vorderkante des Gutstapels (S) bildet.

11. Anleger nach einem der Ansprüche 4 bis 10, **dadurch gekennzeichnet, dass** die Schleuse (4) durch die erste Schleuseneinrichtung (4a) gebildet ist, wenn sich das Schleusenelement (6) in seiner aktiven Grundstellung befindet, und dass die Schleuse (4) durch die die zweite Schleuseneinrichtung (4b) gebildet ist, wenn sich das oder jedes obere Leitelement (7, 8) der Welleneinrichtung (5) in seiner aktiven Grundstellung befindet.

12. Anleger nach einem der voranstehenden Ansprüche, **dadurch gekennzeichnet, dass** das Förderelement (3) einen oder mehrere parallel und quer zur Abzugsrichtung (a) im Abstand zueinander angeordnete und von einem Förderantrieb angetriebene(n) Riemen (13) umfasst, wobei der oder die Riemen (13) insbesondere eine Oberfläche aus einem elastischen Material und insbesondere aus einem Weichkunststoff oder aus Kautschuk oder einer Kombination dieser Materialien aufweist.

13. Anleger nach einem der Ansprüche 11 oder 12, **dadurch gekennzeichnet, dass** das Schleusenelement (6) in seiner aktiven Grundstellung in die nachgiebig ausgebildete Förderfläche (3a) des Riemens (13) verformend eingreift oder eindrückt.

14. Verfahren zum Abziehen flacher Güter (G) aus einem Stapel (S), insbesondere in einem Beilagenanleger für Beilagen, wobei der Stapel (S) in einem Stapelfach (1) abgelegt wird und aus dem Stapel (S) einzelne Güter (G) entlang einer Abzugsrichtung (a) mittels einer Abzugseinrichtung (2) abgezogen und mittels eines Förderelements (3) mit einer Förderfläche (3a) durch eine Schleuse (4) geführt werden, wobei die Schleuse (4) eine erste Schleuseneinrichtung (4a) und eine zweite Schleuseneinrichtung (4b) umfasst und ein von dem Stapel (S) abgezogenes Gut (G) beim Durchführen durch die Schleuse (4) entweder mit der ersten Schleuseneinrichtung (4a) oder mit der zweiten Schleuseneinrichtung (4b) in Eingriff gebracht wird, **dadurch gekennzeichnet, dass** ein durch die zweite Schleuseneinrichtung (4b) geführtes Gut (G) wellenförmig verformt wird, wenn das Gut (G) mit der zweiten Schleuseneinrichtung (4b) in Eingriff gebracht wird.

## Claims

1. Feeder for flat goods, in particular enclosure feeder for enclosures, with a stacking compartment (1) for receiving the goods (G) in the form of a stack (S), and an extracting device (2) for extracting individual goods (G) from the stack (S) in an extracting direction (a), wherein the extracting device (2) comprises a conveying element (3) with a conveying surface (3a) and a gate (4) through which the goods (G) extracted from the stack (S) are guided individually by means of the conveying element (3), wherein the gate (4) comprises a first gate device (4a) and a second gate device (4b) and wherein a good (G) extracted from the stack (S) is brought into engagement either with the first gate device (a) or with the second gate device (4b) when guided through the gate (4), **characterised in that** the second gate device (4b) comprises a wave device (5) with at least one guide element (7, 8) which is arranged above the conveying surface (3a) and deforms the good (G) guided by the wave device (5) in a wave shape when the good (G) is brought into engagement with the second gate device (4b).

2. Feeder according to claim 1, **characterised in that** the first gate device (4a) comprises a gate element (6) which is arranged above the conveying surface (3a) and with the conveying element (3) forms a gate gap (10) of variable gap width through which a good (G) extracted from the stack (S) is guided essentially without the imposition of a wave shape when the good (G) is brought into engagement with the first gate device (4a).

3. Feeder according to one of the preceding claims, **characterised in that** the first gate device (4a) can be brought into an active base position in which it comes into engagement with a good (G) extracted from the stack (S) in order to guide it through the gate (4), and **in that** at the same time the second gate device (4b) can be brought into a passive base position in which it is disengaged from an extracted good (G) when this is guided through the gate (4), and vice versa.

4. Feeder according to one of claims 2 or 3, **characterised in that** both the gate element (6) and the guide element (7, 8) arranged above the conveying surface (3 a) can be moved independently of one another in relation to the conveying surface (3a) in order to adjust the distance of the gate element (6) from the conveying surface (3a) independently of the distance of the guide element (7, 8).

5. Feeder according to one of claims 2 to 4, **characterised in that** the distance between the gate element (6) and the conveying surface (3a) can be varied between an active base position and a passive base position, wherein the gate element (6) in the active base position with the conveying surface (3 a) forms a narrow gate gap (10) through which only individual goods (G) can be guided, and in its passive base position is raised so far from the conveying surface (3 a) that the gate gap (10) is opened wide so that goods (G) guided through the gate (4) remain disengaged from the gate element (6).

6. Feeder according to one of the preceding claims, **characterised in that** the wave device (5) exhibits lower guide elements (25, 26) and upper guide elements (7, 8), wherein the upper guide elements (7, 8) are arranged above the conveying surface (3 a) and their distance from the conveying surface (3a) and/or from the lower guide elements (25, 26) is variable.

7. Feeder according to one of the preceding claims, **characterised in that** the upper guide elements (7, 8) of the wave device (5) can be moved between a first active base position and a second passive base position, wherein the upper guide elements (7, 8) in the active base position with the lower guide elements (25, 26) and/or with the conveying element (3) come into engagement with a good (G) guided by the wave device (5) and deform it with a wave shape and the upper guide elements (7, 8) in the passive base position are raised so far from the conveying surface (3 a) that a good (G) guided by the wave device (5) is guided through the gate (4) without deformation.

8. Feeder according to one of claims 5 to 7, **characterised in that** the gate element (6) in its active base position lies on the conveying surface (3a) and the gate gap (10) is closed in this position when no good (G) is guided through the gate (4).

9. Feeder according to one of claims 2 to 8, **characterised in that** the gate element (6) exhibits a stop face (6') which faces the stack (S) of goods and stands at an inclined angle to the conveying surface (3a) and on which the front edge of the stack (S) of goods bears.

10. Feeder according to claim 9, **characterised in that** the stop surface (6') forms a stop for the front edge of the stack (S) of goods both in the active base position and in the passive base position of the gate element (6).

11. Feeder according to one of claims 4 to 10, **characterised in that** the gate (4) is formed by the first gate device (4a) when the gate element (6) is in its active base position, and **in that** the gate (4) is formed by the second gate device (4b) when the or each upper guide element (7, 8) of the wave device (5) is in its active base position.

12. Feeder according to one of the preceding claims, **characterised in that** the conveying element (3) comprises one or more belts (13) which are arranged parallel and transversely with respect to the extracting direction (a) and at a distance from one another and driven by a conveying drive, wherein the belt or belts (13) in particular exhibit a surface made of an elastic material and in particular of a soft plastic or of rubber or of a combination of these materials.

13. Feeder according to one of claims 11 or 12, **characterised in that** the gate element (6) in its active base position engages while deforming or presses into the yielding conveying surface (3a) of the belt (13).

14. Method for extracting flat goods (G) from a stack (S), in particular in an enclosure feeder for enclosures, wherein the stack (S) is placed in a stacking compartment (1) and individual goods (G) are extracted from the stack (S) in an extracting direction (a) by means of an extracting device (2) and guided through a gate (4) by means of a conveying element (3) with a conveying surface (3a), wherein the gate (4) comprises a first gate device (4a) and a second gate device (4b) and wherein a good (G) extracted from the stack (S) is brought into engagement either with the first gate device (4a) or with the second gate device (4b) when guided through the gate (4), **characterised in that** a good (G) guided through the second gate device (4b) is deformed in a wave shape when the good (G) is brought into engagement with the second gate device (4b).

## Revendications

1. Margeur pour marchandises plates, en particulier margeur de documents pour documents, avec un plateau d'empilage (1) destiné à recevoir des marchandises (G) sous la forme d'une pile (S) et un dispositif d'extraction (2) pour retirer des marchandises individuelles (G) de la pile (S) le long d'un sens d'extraction (a), le dispositif d'extraction (2) comportant un élément de transport (3) avec une surface de transport (3a) et un sas (4), par lequel les marchandises (G) retirées de la pile (S) sont passées individuellement à l'aide de l'élément de transport (3), le sas (4) comportant un premier dispositif de sas (4a) et un second dispositif de sas (4b) et une marchandise (G) retirée de la pile (S) étant amenée en engagement lors du passage par le sas (4) avec le premier dispositif de sas (4a) ou avec le second dispositif de sas (4b), **caractérisé en ce que** le second dispositif de sas (4b) comporte un dispositif d'ondulation (5) avec au moins un élément conducteur (7, 8) agencé au-dessus de la surface de transport (3a), qui déforme de manière ondulée une marchandise (G) guidée par le dispositif d'ondulation (5) si la marchandise (G) est amenée en engagement avec le second dispositif de sas (4b).

2. Margeur selon la revendication 1, **caractérisé en ce que** le premier dispositif de sas (4a) comporte un élément de sas (6) agencé au-dessus de la surface de transport (3a), qui forme avec l'élément de transport (3) une fente de sas (10) avec un écartement de fente modifiable, par laquelle une marchandise (G) retirée de la pile (S) est passée essentiellement sans introduction d'une forme ondulée, si la marchandise (G) est amenée en engagement avec le premier dispositif de sas (4a).

3. Margeur selon l'une quelconque des revendications précédentes, **caractérisé en ce que** le premier dispositif de sas (4a) peut être amené dans une position de base active, dans laquelle il prend en engagement une marchandise (G) retirée de la pile (S) afin de la passer par le sas (4) et **en ce que** le second dispositif de sas (4b) peut être amené simultanément dans une position de base passive, dans laquelle il est désengagé d'une marchandise retirée (G) si celle-ci est passée par le sas (4) et inversement.

4. Margeur selon l'une quelconque des revendications 2 ou 3, **caractérisé en ce que** non seulement l'élément de sas (6) mais aussi l'élément conducteur (7, 8) agencé au-dessus de la surface de transport (3a) sont mobiles indépendamment l'un de l'autre par rapport à la surface de transport (3a) afin de régler la distance entre l'élément de sas (6) et la surface de transport (3a) indépendamment de la distance de l'élément conducteur (7, 8).

5. Margeur selon l'une quelconque des revendications 2 à 4, **caractérisé en ce que** la distance entre l'élément de sas (6) et la surface de transport (3a) peut être modifiée entre une position de base active et une position de base passive, l'élément de sas (6), dans la position de base active, formant avec la surface de transport (3a) une fente de sas étroite (10) par laquelle seules des marchandises individuelles (G) peuvent être passées, et étant levé dans sa position de base passive si loin de la surface de transport (3a) que la fente de sas (10) est grande ouverte de sorte que des marchandises (G) passées par le sas (4) restent désengagées de l'élément de sas (6).

6. Margeur selon l'une quelconque des revendications précédentes, **caractérisé en ce que** le dispositif d'ondulation (5) présente des éléments conducteurs inférieurs (25, 26) et des éléments conducteurs supérieurs (7, 8), les éléments conducteurs supérieurs (7, 8) étant agencés au-dessus de la surface de transport (3a) et leur distance par rapport à la surface de transport (3a) et/ou aux éléments conducteurs inférieurs (25, 26) étant modifiable.

7. Margeur selon la revendication 6, **caractérisé en ce que** les éléments conducteurs supérieurs (7, 8) du dispositif d'ondulation (5) sont mobiles entre une première position de base active et une seconde position de base passive, les éléments conducteurs supérieurs (7, 8) dans la position de base active prenant, en engagement avec les éléments conducteurs inférieurs (25, 26) et/ou avec l'élément de transport (3), une marchandise guidée par le dispositif d'ondulation (5), et se déformant en forme d'onde, et les éléments conducteurs supérieurs (7, 8), dans la position de base passive, étant levés si loin de la surface de transport (3a) qu'une marchandise guidée par le dispositif d'ondulation (5) est passée sans déformation par le sas (4).

8. Margeur selon l'une quelconque des revendications 5 à 7, **caractérisé en ce que** l'élément de sas (6) repose dans sa position de base active sur la surface de transport (3a) et la fente de sas (10) est fermée dans cette position si aucune marchandise (G) n'est guidée par le sas (4).

9. Margeur selon l'une quelconque des revendications 2 à 8, **caractérisé en ce que** l'élément de sas (6) présente une surface de butée (6') tournée vers la pile de marchandises (S) et se trouvant en biais vers la surface de transport (3a), sur laquelle surface de butée l'arête avant de la pile de marchandises (S) repose.

10. Margeur selon la revendication 9, **caractérisé en ce que** la surface de butée (6') forme non seulement dans la position de base active mais aussi dans la position de base passive de l'élément de sas (6) une butée pour l'arête avant de la pile de marchandises (S).

11. Margeur selon l'une quelconque des revendications 4 à 10, **caractérisé en ce que** le sas (4) est formé par le premier dispositif de sas (4a) si l'élément de sas (6) se trouve dans sa position de base active et **en ce que** le sas (4) est formé par le second dispositif de sas (4b) si le ou chaque élément conducteur supérieur (7, 8) du dispositif d'ondulation (5) se trouve dans sa position de base active.

12. Margeur selon l'une quelconque des revendications précédentes, **caractérisé en ce que** l'élément de transport (3) comporte une ou plusieurs courroies (13) agencées parallèlement et transversalement au sens d'extraction (a), à distance les unes des autres, et entraînées par un entraînement de transport, la ou les courroies (13) présentant en particulier une surface en un matériau élastique et en particulier en un plastique mou ou en caoutchouc ou en une combinaison de ces matériaux.

13. Margeur selon l'une quelconque des revendications 11 ou 12, **caractérisé en ce que** l'élément de sas (6) s'engage ou s'enfonce en se déformant dans sa position de base active dans la surface de transport (3a) réalisée de manière flexible de la courroie (13).

14. Procédé d'extraction de marchandises plates (G) d'une pile (S), en particulier dans un margeur de documents pour des documents, la pile (S) étant déposée dans un plateau d'empilage (1) et des marchandises individuelles (G) étant retirées de la pile (S) le long d'un sens d'extraction (a) à l'aide d'un dispositif d'extraction (2) et étant guidées à l'aide d'un élément de transport (3) avec une surface de transport (3a) par un sas (4), le sas (4) comportant un premier dispositif de sas (4a) et un second dispositif de sas (4b) et une marchandise (G) retirée de la pile (S) étant amenée en engagement lors du passage par le sas (4) avec le premier dispositif de sas (4a) ou avec le second dispositif de sas (4b), **caractérisé en ce qu'**une marchandise (G) guidée par le second dispositif de sas (4b) est déformée de manière ondulée si la marchandise (G) est amenée en engagement avec le second dispositif de sas (4).
